# EUROPEAN PATENT SPECIFICATION

(11) **EP 4 108 310 B1**
(45) Date of publication and mention of the grant of the patent: **19.02.2025**
(21) Application number: 22151727.9
(22) Date of filing: 17.01.2022
(51) Int. Cl.: B01D 46/00, G01F 15/12

(54) **A GAS FILTER**
EIN GASFILTER
UN FILTRE POUR GAZ

(30) Priority: 24.06.2021 PL 43826421
(43) Date of publication of application: 28.12.2022
(73) Proprietor: Apator Metrix Spolka Akcyjna, 83-110 Tczew (PL)
(72) Inventor: Babraj, Grzegorz, 80-180 Gdansk (PL)
(74) Representative: Wroblewski, Marcin Jan

(56) References cited:
- EP-A1- 1 015 090
- EP-A1- 2 098 835
- US-A- 3 076 336
- US-A- 4 228 768
- US-A1- 2008 053 879
- US-A1- 2011 036 242

## Description

The object of the invention is a gas filter which is found useful primarily in microthermal and ultrasound gas meters.

Known microthermal or ultrasound gas meters are particularly vulnerable to gas contaminants present in a gas network. Measurement of the flow of contaminated gas is hindered, and the accuracy of measurement deteriorates along with the passing of time and the deposition of contaminants inside the measuring unit.

In prior art, from WO2020097515A1 there is a known gas meter comprising a trap for gas-contaminating particles. The trap has a body, in which one can distinguish an upper part and a lower part. In the upper part of the body there are inlet openings for gas flowing into the lower part of the body. Inside the body there are ramps directing the flow of gas, and fingers constituting obstacles, on which particles of contaminants precipitate from the flowing gas. The purified gas is released from inside the trap through numerous perforations present in the upper surface of the lower part of the trap body. Perforations can serve further purification of the flowing gas.

On the other hand, CN208998860U discloses an ultrasound gas meter having inner filters. Inside the gas meter there are attached filters made of metal sponge - an L-shaped filter placed directly at the inlet port, and a filter in the shape of flow-blocking elements, placed in the lower part of the gas meter. Moreover, inside the gas meter, at the inner inlet of gas into the ultrasonic measurement device, there is a filtering screen. The whole surface of the inlet into the ultrasonic measurement device is closed by said filtering screen.

Also, CN108303154A discloses an electronic gas meter, including an ultrasound and microthermal gas meter, having an inner gas filter. It is provided with a connecting body and the actual filtering element. The connecting body is connected to the gas inlet opening into the gas meter, and it also has an attached filtering element. The body is connected to the filtering element by snap fitting, the filtering element having a cylindrical construction, to which filtering material is attached circumferentially. The filtering material is fibreglass fabric, comprising fibreglass monofilaments arranged in the shape of a mesh. Therefore, an inner, cylindrical chamber is formed in the filtering element, on the circumference of which there is filtering material. Consequently, gas from the inlet opening flows into the cylindrical chamber of the filter insert, and subsequently through the filtering material inside the gas meter and into the measuring unit.

Besides, US2008053879A1 discloses a fluid filter, particularly oil filter with a fluid pressure sensor. In this solution a fluid filter canister encloses a filter medium and the canister has integral pressure sensor device such that the entire apparatus can be removed and/or replaced as a unit. The pressure indicator apparatus signalizes that a filter might be clogged and it requires replacing. What is more problems potentially associated with contamination, clogging and wear of the sensor apparatus are avoided due to possibility of replacing whole unit filter together with the pressure sensor. This invention enables a user to easily see when a fluid filter is no longer permitting proper oil flow by actuating an indicator that is easily visible outside of the housing.

What is more, US4228768A discloses air induction apparatus cooperating with a flow meter. It has an air inlet tube which is provided with bypass flow of air. Bypass is engaged when the amount of air exceeds a predetermined level which is required to pass through the inlet tube. The aim of this bypass is to increase intake of air into internal combustion engine in order to meet engine's demands. When the combustion engine is under low speed operation, such as under idling condition, to necessitate a small amount of air, all the air to be fed into the engine passes the through a first and second filter members and bypass is not used. Under this, uniformed air flow is produced in the inlet tube, so that accurate measurement by the vortex shedding flow meter is achieved. While, when the engine is under high speed operation necessitating a big volume of air, the bypass passage is used. It allows to circumvent first filter member and to increase the air intake. Whole flow of air goes through second filter member and subsequently to the flow meter. So even during the engine high speed operation the air feeding to the engine is smoothly made without affecting the output power of the engine.

The purpose of the invention is to solve the technical problem involving the necessity to provide proper amount of gas flowing through the measuring unit of the gas meter, taking into account contaminants accumulated on the filtering elements of the gas meter.

The invention relates to a gas filter, adapted to being placed inside the casing of a gas meter, comprising a body with a gas inlet opening, at least one gas outlet opening, and at least one filter insert comprising filtering material covering the at least one gas outlet opening, and at least one bypass assembly. The essence of the invention is in that said bypass assembly is configured such that it allows for circumventing the filter insert by the gas flowing through the gas filter when a gas pressure inside the gas filter is elevated due to the contamination of the filter inserts limiting the flow through filter insert, thereby maintaining undisturbed flow of gas through the gas meter.

Preferably, the bypass assembly is seated in the body of the filter.

It is equally preferable when the bypass assembly comprises a through opening which has a movable closure.

It is preferable when the bypass assembly and the gas inlet opening are placed on the same surface of the body.

It is desirable for the bypass assembly to have a resilient element, and for the movable closure to be connected to one end of the resilient element, the second end of which is seated in the body.

It is appropriate when the bypass assembly has a sensor adapted to communicate with the counter of the gas meter, indicating the position of the bypass assembly.

Equally preferably, the filtering material comprises filtering fabric.

It is desirable for the filter insert to be detachably connected to the body.

It is preferable when the filter insert has a frame fastening it to the body, the frame having ears pressed onto the protrusions of the body.

It is also advisable when a gas inlet port is slidingly seated in the gas inlet opening.

In the present description, the bypass assembly is to be understood as any solution serving the function of adjusting the flow of gas through the gas filter.

The primary advantage of the invention is to guarantee the proper amount of gas flowing through the measuring unit of the gas meter in the case of reaching a specified level of blockage of the filter insert, occurring as a result of contaminants deposited thereon. This has been achieved by the use of a bypass assembly opening after reaching specified blockage of the filter insert. This occurs especially during increased resistances of flow through the filter insert, resulting in an increased pressure differential between the inside of the gas filter and its outer part. Elevated pressure affects the bypass assembly, causing direct flow of gas through this bypass assembly, with partial or complete circumventing the filter insert. This ensures continuous inflow of a proper amount of gas into the measuring unit, regardless of the degree of contamination of the filter insert. This also allows for avoiding limitations in the flow of gas through the gas meter, which can be noticeable for the gas user and manifest themselves by the presence of a smaller gas flame, or defects in the functioning of the furnace.

Yet another advantage resulting from the use of the bypass assembly is the possibility to thoroughly purify the gas using filtering fabrics with high filtration efficiency, belonging to class G, M or F according to the standard PN EN 779:2012, or belonging to class PM10, PM2.5 and PM1 according to the standard PN EN ISO 16890. The listed filtering fabrics efficiently stop any contaminants carried by the gas. At the same time, the blockage of the filter insert does not affect the amount of gas flowing through the gas meter, since its proper amount will be delivered via the bypass assembly to the measuring unit. Due to such construction, it is also possible to limit the overall surface area of filtering materials used in the gas meter.

Further advantages of the invention are achieved when retaining the simple construction of the bypass assembly, which allows for retaining the reliability of operation, and at the same time does not significantly affect the increase in costs related to the manufacturing of a gas meter with such a gas filter. Especially in the case of using the construction with a bypass assembly in the form of a through opening with a movable closure, it is possible to provide a self-activating bypass assembly by simple measures. As already mentioned, the increase in flow resistances across the filter causes an increased pressure differential between its inside and its outer part. Said pressure differential causes increased pressure on the movable closure, causing it to lift, thus enabling free flow of gas bypassing the filter insert. In such a case, the movable closure is kept in a closed position by gravity. Still other advantages may be provided if the movable closure, especially in the form of a lid, is kept in a closed position by the resilient element. Because of this, the gas filter may be attached in any position. The pressure differential will result in overcoming the resistance provided by the resilient element. Such a solution allows for the use of any resilient element, and therefore for adjusting the force keeping the closure in a closed position.

Still other advantages of the solution can be achieved by providing the bypass assembly with a sensor indicating its position, communicating with the counter of the gas meter. Therefore, the sensor conveys information about the closed or open bypass assembly to the counter, which signalises to the user of the gas meter the necessity to take actions related to servicing the measurement device. The need to initiate servicing actions may also be conveyed directly to the operator of the gas network, using proper communication of the counter. Due to such a solution, the gas flows through the bypass assembly as briefly as possible, and it is possible to promptly take actions allowing for restoration of gas flow with full filtration.

Moreover, servicing, as well as the very assembly of the gas filter, are simple due to the use of a detachable connection of the filter insert to the body, in particular the securing frame with the filtering fabric being press-fit with the protrusions of the body. The simplicity of actions related to the assembly is also due to the possibility of slidable seating of the gas inlet port in the body of the gas filter. Because of this, the gas filter is also universal, and it can be used in various models of gas meters, since a replacement of the inlet port does not result in the necessity to replace the entire gas filter.

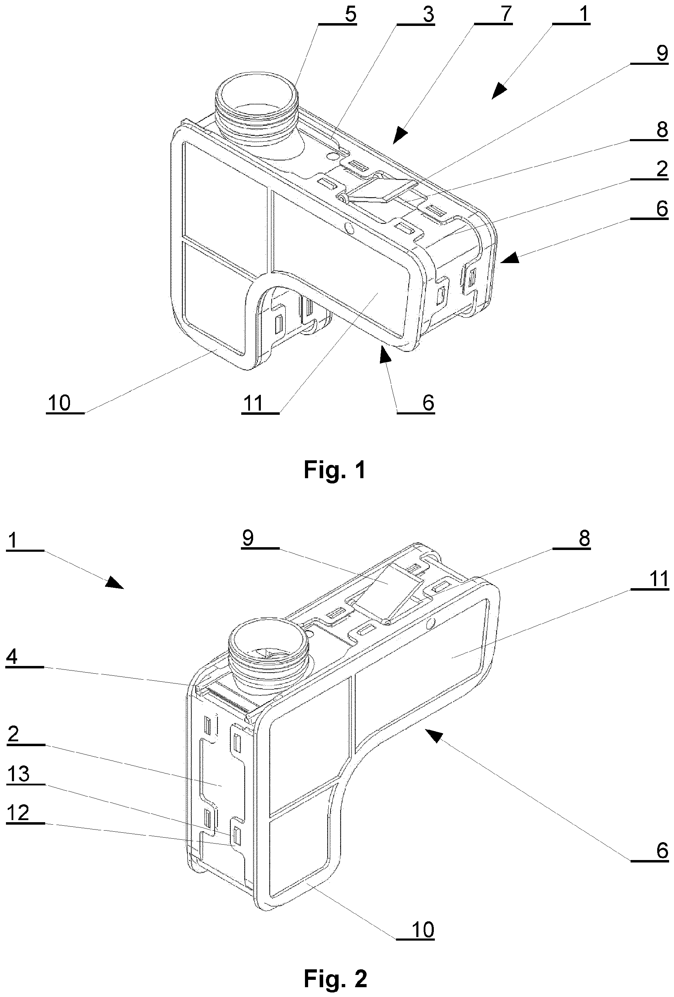

The invention is presented in embodiments and in the drawing, in which fig. 1 presents the gas filter in a perspective view, fig. 2 - the gas filter in a further perspective view, fig. 3 - the body of the gas filter in a perspective view, fig. 4 - the gas filter in a further perspective view with the inlet opening visible, fig. 5 - a front view of the gas filter mounted in the casing of a gas meter, in a cross-section of the casing, fig. 6 - a side view of the body of the gas filter in another embodiment, fig. 7 - the gas filter in a further embodiment in a perspective view.

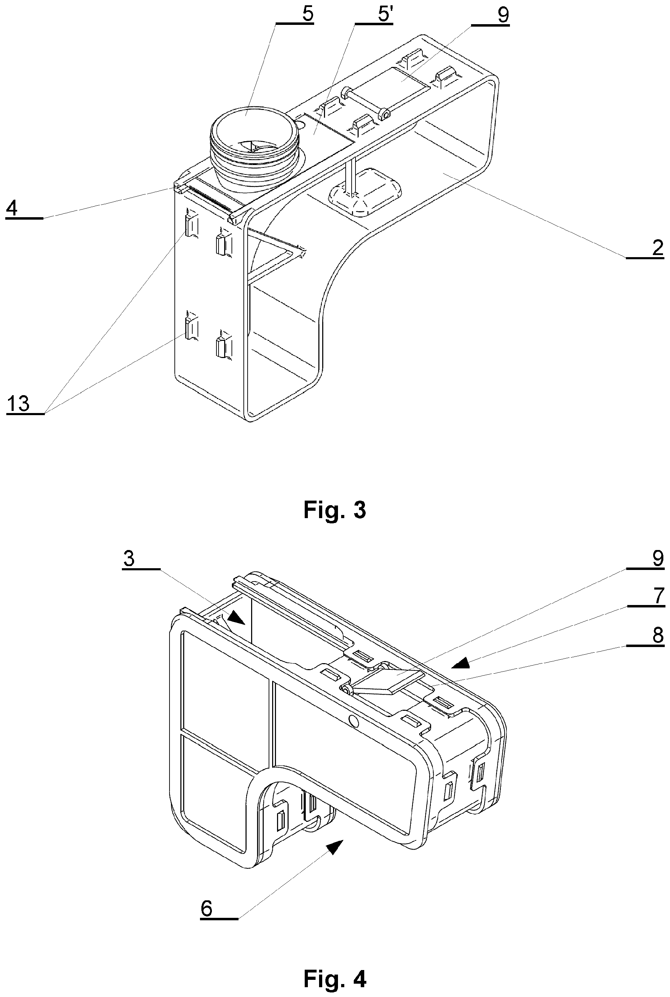

The gas filter 1 is placed inside the casing 14 of an ultrasound gas meter. In the casing 14 there is a gas inlet 15 and outlet 16. The gas filter 1 has a body 2 with an inlet opening 3 for gas. On the inner edges of the inlet opening 3, the body 2 has guides 4, into which a gas inlet port 5 is slid. In order to be slid into the guides 4, the gas inlet port 5 has an assembly plate 5' in its lower part. Two filter inserts 6 comprising filtering material 11 are connected to the body 2. In turn, in the body 2 itself, in its upper surface, on which there is also the gas inlet opening 3, a bypass assembly 7 is seated, made in the form of a through opening 8 with a movable closure in the form of a lid 9. Having been assembled inside the gas meter, the upper surface of the body 2 is generally in the upper part of the gas meter, and gas from the network flows into the gas filter 1 first. The lid 9 is rotatably attached at one of the edges of the through opening 8, wherein the lid 9, in a normal position, that is, when it is not subjected to the elevated pressure from inside the gas filter 1, is placed in a closed position (fig. 3). This has been achieved by placing the bypass assembly 7 on the upper surface of the body 2, which allows for using gravity to keep the lid 9 in a closed position. Elevated gas pressure, generated due to the contamination of the filter inserts 6 and due to limiting the flow, results in overcoming the force of gravity and opening the lid 9. Therefore, in spite of clogging the filter inserts 6 with contaminants, the required undisturbed flow of gas is maintained through the measuring unit.

Each filter insert 6 has a securing frame 10 adapted to be connected to the body 2. Moreover, filtering material 11 is attached onto the securing frame 10, in an embodiment having the form of filtering fabric belonging to class M according to the standard PN EN 779:2012. This allows for eliminating the contaminants by thorough filtration of gas, ensuring high quality of measurement in the gas meter.

The securing frame 10 of the filter insert is detachably connected to the body, and it has ears 12 pressed onto the protrusions 13 on the body 2.

In other embodiments (not presented in the drawing), the bypass assembly may be seated in other parts of the gas filter than the body. It is possible to place the bypass assembly in the filter insert, including in its securing frame, or in the area of the inlet opening. In particular, if the inlet opening has the form of an inlet tube, the bypass assembly can be formed on a part of this inlet tube.

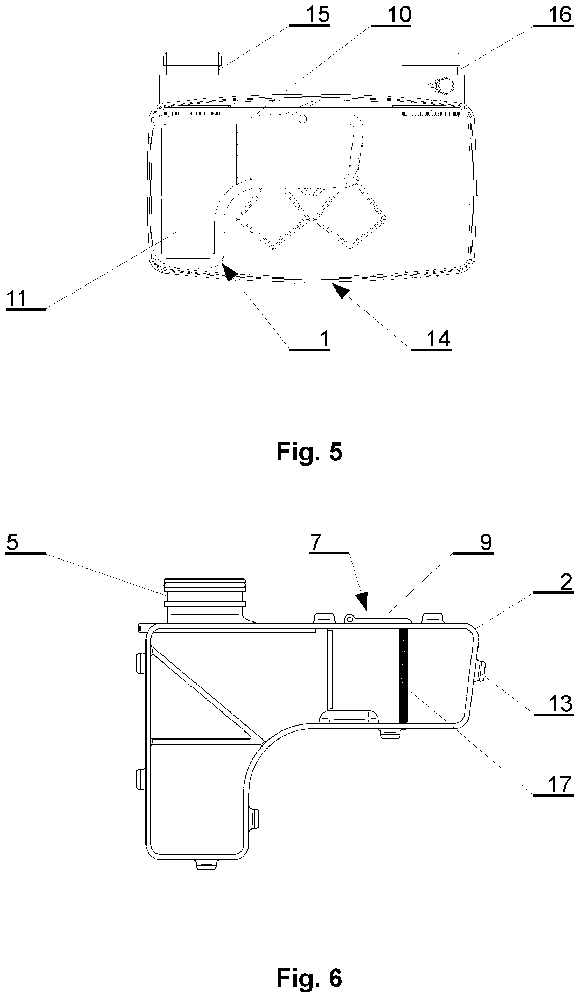

In a further embodiment, the bypass assembly 7 (fig. 6) with a movable closure in the form of a lid 9 is also seated in the body 2 of the filter insert 6. However, it is additionally provided with a resilient element in the form of a coil spring 17 placed inside the body 2 of the gas filter 1. One end of the spring is connected to the inner surface of the body 2, on the wall of the body 2 lying opposite the wall of the body 2 with the bypass assembly 7. In turn, the second end of the coil spring 17 is attached onto the inner part of the lid 9. Therefore, the coil spring 17 keeps the lid in a closed position. Because of this, the bypass assembly 7 with a simple construction may also be seated on the lower parts of the gas filter 1, with the lid 9 opening downwards. The elevated gas pressure generated due to the contamination of the filter inserts 6, and due to limiting the flow, results in overcoming the force of the spring, extending it, and subsequently opening the lid 9.

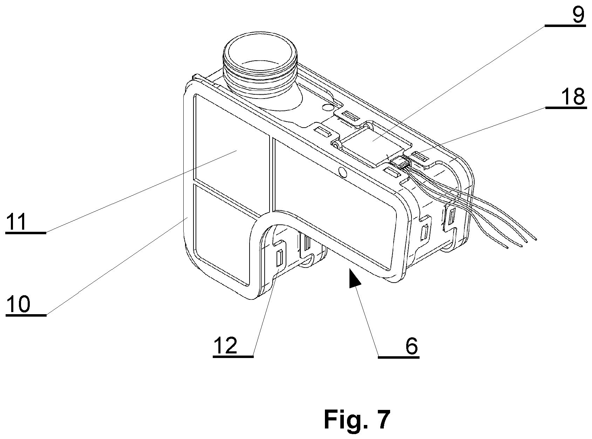

In a further embodiment, the bypass assembly 7 (fig. 7) has a sensor 18 indicating its position and adapted to communicate with the counter of the gas meter using a wired connection. As a consequence, the sensor signalises in particular opening of the bypass assembly 7, meaning opening of the lid 9. The signal from the sensor 18 is conveyed to the counter of the gas meter, due to which the user of the measurement device acquires information indicating the necessity to perform service work, and in particular to clean or replace the filter inserts 6. Using the counter of the gas meter or another recording device, the signal from the sensor 18 of the bypass assembly 7 may also be conveyed to the operator of the gas network.

## Claims

1. A gas filter (1), adapted to being placed inside the casing of a gas meter, comprising a body (2) with a gas inlet opening (5), at least one gas outlet opening, at least one filter insert (6) comprising filtering material (11) covering the at least one gas outlet opening, **characterized in that** the gas filter (1) further comprises at least one bypass assembly (7), wherein said bypass assembly (7) is configured such that it allows for circumventing the filter insert (6) by the gas flowing through the gas filter (1) when a gas pressure inside the gas filter (1) is elevated due to the contamination of the filter inserts (6) limiting the flow through filter insert (6), thereby maintaining undisturbed flow of gas through the gas meter.

2. The filter according to claim 1, **characterised in that** the bypass assembly (7) is seated in the body (2) of the gas filter (1).

3. The filter according to claim 1 or 2, **characterised in that** the bypass assembly (7) comprises a through opening (8), which has a movable closure (9).

4. The filter according to claim 2 or 3, **characterised in that** the bypass assembly (7) and the gas inlet opening (3) are placed on the same surface of the body (2).

5. The filter according to claim 3 or 4, **characterised in that** the bypass assembly (7) has a resilient element, and the movable closure (9) is connected to one end of the resilient element, the second end of which is seated in the body.

6. The filter according to one of the claims from 1 to 5, **characterised in that** the bypass assembly (7) has a sensor adapted to communicate with the counter of the gas meter, indicating the position of the bypass assembly.

7. The filter according to one of the claims from 1 to 6, **characterised in that** the filtering material (11) comprises filtering fabric (11).

8. The filter according to claim 7, **characterised in that** the filter insert (6) is detachably connected to the body (2).

9. The filter according to claim 8, **characterised in that** the filter insert (6) has a frame (10) fastening it to the body (2), the frame (10) having ears (12) pressed onto the protrusions (13) of the body.

10. The filter according to one of the claims from 1 to 9, **characterised in that** a gas inlet port (5) is slidingly seated in the gas inlet opening (3).

## Patentansprüche

1. Ein Gasfilter (1), ausgelegt zur Platzierung im Gehäuse eines Gaszählers mit einem Körper (2) mit einer Gaseinlassöffnung (5), mindestens einer Gasauslassöffnung, mindestens einem Filtereinsatz (6), der Filtermaterial (11) umfasst und der Filtermaterial mindestens eine Gasauslassöffnung abdeckt, **dadurch gekennzeichnet, dass** der Gasfilter (1) ferner mindestens eine Bypass-Einrichtung (7) umfasst, wobei die Bypass-Einrichtung (7) so konfiguriert ist, dass sie es dem Gas, das durch den Gasfilter (1) geht, ermöglicht, den Filtereinsatz (6) zu umgehen, wenn ein erhöhter Gasdruck im Gasfilter (1) aufgrund der Verunreinigung des Filtereinsatzes (6), die den Durchfluss durch den Filtereinsatz (6) begrenzt, entsteht, wodurch ein ununterbrochener Gasfluss durch den Gaszähler aufrechterhalten wird.

2. Der Gasfilter nach Anspruch 1, **dadurch gekennzeichnet, dass** die Bypass-Einrichtung (7) im Körper (2) des Gasfilters (1) eingesetzt ist.

3. Der Gasfilter nach Anspruch 1 oder 2, **dadurch gekennzeichnet, dass** die Bypass-Baugruppe (7) eine Durchgangsöffnung (8) mit einem beweglichen Verschluss (9) umfasst.

4. Der Gasfilter nach Anspruch 2 oder 3, **dadurch gekennzeichnet, dass** die Bypass-Einrichtung (7) und die Gaseinlassöffnung (3) auf derselben Oberfläche des Körper (2) platziert sind.

5. Der Gasfilter nach Anspruch 3 oder 4, **dadurch gekennzeichnet, dass** die Bypass-Einrichtung (7) ein elastisches Element aufweist, wobei der bewegliche Verschluss (9) mit einem Ende des elastischen Elements verbunden ist, dessen zweite Ende im Körper (2) eingesetzt ist.

6. Der Gasfilter nach einem der Ansprüche 1 bis 5, **dadurch gekennzeichnet, dass** die Bypass-Einrichtung (7) einen Sensor aufweist, der zur Kommunikation mit dem Zählwerk des Gaszählers geeignet ist und die Position der Bypass-Einrichtung anzeigt.

7. Der Gasfilter nach einem der Ansprüche 1 bis 6, **dadurch gekennzeichnet, dass** das Filtermaterial (11) ein Filtergewebe (11) umfasst.

8. Der Gasfilter nach Anspruch 7, **dadurch gekennzeichnet, dass** der Filtereinsatz (6) lösbar mit dem Körper (2) verbunden ist.

9. Der Gasfilter nach Anspruch 8, **dadurch gekennzeichnet, dass** der Filtereinsatz (6) einen Rahmen (10) aufweist, der ihn am Körper (2) befestigt, wobei der Rahmen (10) Laschen (12) aufweist, die auf Vorsprünge (13) des Gehäuses gedrückt werden.

10. Der Gasfilter nach einem der Ansprüche 1 bis 9, **dadurch gekennzeichnet, dass** ein Gaseinlassanschluss (5) verschieblich in der Gaseinlassöffnung (3) gelagert ist.

## Revendications

1. Un filtre à gaz (1), adapté pour être placé à l'intérieur du boîtier d'un compteur de gaz, comprenant un boîtier (2) avec une orifice d'entrée de gaz (5) au moins une ouverture de sortie de gaz, au moins un insert filet (6) comprenant un matériau filtrant (11) couvrant au moins une ouverture de sortie de gaz, **caractérisé en ce que** le filtre à gaz (1) comprend en outre au moins un ensemble de dérivation (7), dans lequel ledit ensemble de dérivation (7) est configuré de manière à permettre le contournement de la cartouche filtrante (6) par le gaz circulant dans le filtre à gaz (1) lorsqu'une pression de gaz à l'intérieur du filtre à gaz (1) est élevée en raison de la contamination des cartouches filtrantes (6) limitant le flux à travers la cartouche filtrante (6), ce qui permet de maintenir un flux de gaz non perturbé à travers le compteur de gaz.

2. Le filtre selon la revendication1, **caractérisé en ce que** l'assemblage de dérivation (7) est placé dans le boîtier (2) du filtre à gaz (1).

3. Le filtre selon la revendication1 ou 2, **caractérisé en ce que** l'assemblage de dérivation (7) comprend une ouverture de passage (8), qui a une fermeture mobile (9).

4. Le filtre selon la revendication2 ou 3, **caractérisé en ce que** l'assemblage de dérivation (7) et l'orifice d'entrée de gaz (3) sont placés sur la même surface du boîtier (2).

5. Le filtre selon la revendication3 ou 4, **caractérisé en ce que** l'assemblage de dérivation (7) a un élément élastique, et la fermeture mobile (9) est reliée à une extrémité de l'élément élastique, dont la seconde extrémité est logée dans le boîtier.

6. Le filtre selon l'une des revendications de 1 à 5, **caractérisé en ce que** l'assemblage de dérivation (7) a un capteur adapté pour communiquer avec le compteur du compteur de gaz, indiquant la position de l'assemblage de dérivation.

7. Le filtre selon l'une des revendications de 1 à 6, **caractérisé en ce que** le matériau filtrant (11) comprend un tissu filtrant (11).

8. Le filtre selon la revendication7, **caractérisé en ce que** l'insert filtrant (6) est relié de manière amovible au boîtier (2).

9. Le filtre selon la revendication8, **caractérisé en ce que** l'insert filtrant (6) a un cadre (10) qui le fixe au boîtier (2), le cadre (10) ayant des ouvertures (12) pressées sur les protubérances (13) du boîtier.

10. Le filtre selon l'une des revendications de 1 à 9, **caractérisé en ce qu** 'une tubulure d'entrée de gaz (5) est placé de manière coulissante dans l'ouverture d'admission de gaz (3).
